Europäisches Patentamt

European Patent Office

Office européen des brevets

(11) Publication number: 0 241 089 A1

# EUROPEAN PATENT APPLICATION

(21) Application number: 87200600.2

(22) Date of filing: 01.04.87

(51) Int. Cl.⁴: **C08J 5/18** , B29C 55/26 , H01G 4/18

(30) Priority: 03.04.86 NL 8600852

(43) Date of publication of application:
14.10.87 Bulletin 87/42

(84) Designated Contracting States:
BE CH DE FR GB IT LI NL

(71) Applicant: **STAMICARBON B.V.**
**Mijnweg 1**
**NL-6167 AC Geleen(NL)**

(72) Inventor: **Hegeman, Hendrikus Paulus L.**
**Noetselerweg 6**
**NL-7441 CC Hellendoorn(NL)**
Inventor: **Pieterse, Jan Karel**
**Rijksweg Centrum 51**
**NL-6161 EC Geleen(NL)**
Inventor: **Pluyter, Pieter Boudewijn**
**Dagobertstraat 100**
**NL-6132 ER Sittard(NL)**

(74) Representative: **Hoogstraten, Willem Cornelis**
**Roeland et al**
**OCTROOIBUREAU DSM Postbus 9**
**NL-6160 MA Geleen(NL)**

(54) Thin films of high-molecular polypropylene.

(57) A process for preparing a smooth thin film based on high-molecular weight polypropylene in which the weight-average molecular wieght is at least $4 \times 10^5$, the thickness is 10 μm at most, the thickness is 10 μm at most, the thickness distribution is 10% at most, the average degree of roughness is 2% at most, the maximum degree of roughness is 0.4 μm at most.

EP 0 241 089 A1

## THIN FILMS OF HIGH-MOLECULAR POLYPROPYLENE

The invention relates to films of low thickness and roughness based on high-molecular polypropylene, suited for, inter alia, condenser films.

Condenser films from polypropylene are described, see for instance the Informatie Bulletin about 'Kalle-films', issued by the firm of Hoechst, dated March 1979.

Disadvantages of these known polypropylene films are their low stiffness (circa 2 GPa), their high elongation at break (80-180 %), their rather high thickness ($\geq$ 5 $\mu$m) and particularly their very high thickness variation (more than 10%) and their surface defects.

It is known how to produce polypropylene films with high stiffness and strength by converting dilute solutions of high-molecular polypropylene into a gel through gelation/crystallization and stretching this (Polymer Communications, Vol. 25 Feb. '84, pages 39-42).

The disadvantage of this process is that the ultimate product is very brittle, while thickness and thickness distribution are very high.

The present invention now provides smooth, thin films having a very low thickness distribution, based on high-molecular polypropylene, which films do not show the said disadvantages, or hardly so, and which are highly suitable as condenser film.

The present invention relates to smooth, thin films based on high-molecular polypropylene in which

the weight-average molecular weight is at least 4 $\times$ $10^5$,

the thickness is 10 $\mu$m at most,

the thickness distribution is 10 % at most,

the average degree of roughness, as defined hereinafter, is 2 % at most calculated in respect of the thickness,

the maximum degree of roughness, as defined hereinafter, is 0.4 $\mu$m at most.

The invention particularly relates to films in which the weight-average molecular weight of the polypropylene is at least 5 $\times$ $10^5$ and preferably at least 6 $\times$ $10^5$, of which films the thickness is 5 $\mu$m at most, preferably 1 $\mu$m at most, the thickness distribution is 5 % at most, the average degree of roughness 1.5 % at most and the maximum degree of roughness 0.3 $\mu$m at most.

The average degree of roughness and the maximum degree of roughness are measured and defined as described in DIN 4768 Blatt 1 (August '74).

The films according to the invention are preferably prepared by biaxial stretching a polypropylene gel article, particularly a gel article obtained by thermally reversible gelation of a polypropylene solution.

Such a process includes the transformation, at elevated temperature, of a homogeneous solution of a high-molecular polypropylene having a weight-average molecular weight of at least 4 $\times$ $10^5$ with at least 50 % (wt) of a solvent into a solvent-containing article, transforming this by very rapid cooling into a gel article and subjecting this at high temperature to biaxial stretching whether or not after partial or complete removal of the solvent.

The polypropylene applied may contain minor amounts of copolymerized alkenes and/or other polymers and/or fillers and generally has a weight-average molecular weight between 4 $\times$ $10^5$ and 5 $\times$ $10^6$.

The solvents used may be, inter alia, hydrocarbons like xylene, decalin or paraffinec oils or waxes.

The transformation of the solution can be carried out, for instance, by spinning or by means of a twin-screw extruder with die. Such an extruder is preferably used also for the preparation of the homogeneous solution.

The solvent-containing article is cooled very rapidly. This has been found necessary to preclude brittleness of the product.

If necessary, the gelproduct obtained may be compressed at elevated temperatures, preferably between 90 and 140¤C, whether or not after complete or partial removal of solvent.

The gel article obtained is subjected at elevated temperature, for instance above 100¤C and below the melting, respectively dissolving, temperature, to biaxial stretching whether or not after complete or partial removal of the solvent. In that process the stretching is generally such that the stretching in a lengthwise direction equals or exceeds that in crosswise direction, the product of the draw ratios lengthwise and across being at least 10. The biaxial stretching can be carried out simultaneously or sequentially.

The resulting films are extremely suitable as condenser films, because, in addition to the properties claimed above, they also have a low shrinkage under stress at high temperature, a higher melting point and an improved creep behaviour, and the product is virtually free from pin holes.

The invention is further elucidated in the following examples without, however, being limited thereby.

## Example I

A homogeneous, 2%-(wt) solution of polypropylene - weight-average molecular weight about $1 \times 10^6$ -in xylene was obtained by the transformation, at about 150¤C, and a residence time of about 5 minutes of a 2%-(wt) suspension in a twin-screw extruder of the ZSK type of the firm of Werner and Pfleiderer. This solution was poured out on a very smooth plate to form sheets measuring about $30 \times 30$ cm, which were successively cooled very rapidly using liquid nitrogen, upon which the xylene was substantially removed by evaporation to the air.

The resulting film (thickness lower than 50 μm) was subjected to biaxial stretching at a draw ratio of 4x lengthwise and 4x across at a temperature of about 150¤C.

The resulting product film had a thickness of about 3 μm, a thickness distribution of about 6.5 % over a surface of 10 cm², an average roughness of about 0.05 μm and a maximum roughness of about 0.17 μm.

## Example II

In a process as described in example I, with decalin as the solvent and a solution temperature of 180¤C, a film was produced which was biaxial stretched at a draw ratio 4.2 X lengthwise and 4.1 X across.

The stretched film had a thickness of about 2.8 μm, a thickness distribution of 4.5% over a surfache of 10 cm², an average roughness of about 0.05 μm and a maximum roughness of about 0.15 μm.

## Example III

The process of example I was repeated with the understanding that the polypropylene concentration was 10% (-wt). The resulting film had a thickness of about 100 μm.

This film was biaxial stretched with a draw ratio of 4.7 X lengthwise and 4.8 X across. The stretched film has a thickness of 4.4 μm, a thickness distribution over 10 cm² of 3%, an average roughness of about 0.04 μm and a maximum roughness of 0.11 μm.

## Example IV

The process of example I was repeated, with the understanding that the temperature of the extruder was 160¤C.

The obtained film was biaxial stretched 4.4 X lengthwise and 4.6 X across.

The stretched film had an average thickness of 3.6 μm, and average thickness distribution over a surface of 10 cm² of 5%, an average roughness of about 0.04 μm and a maximum roughness of 0.14 μm.

## Example V

The process of example I was repeated, with the understanding that the gelarticle after removal of solvent was compressed at about 110¤C using a pressure of 30 MPa.

The product obtained had the same properties as the film of example I, but showed no brittleness at all.

## Claims

1. Smooth, thin film based on high-molecular polypropylene, in which the weight-average molecular weight is at least $4 \times 10^5$, the thickness is 10 μm at most, the thickness distribution is 10% at most, the average degree of roughness, as defined hereinbefore, is 2 % at most, calculated in respect of the thickness, the maximum degree of roughness, as defined hereinbefore, is 0.4 μm at most.

2. Film according to claim 1, in which the weight-average molecular weight is at least $5 \times 10^5$, the thickness 5 μm at most, the thickness distribution 5 % at most, the average degree of roughness 1.5 % at most and the maximum degree of roughness 0.3 μm at most.

3. Film according to claim 1 or 2, in which the weight-average molecular weight is at least $6 \times 10^5$ and the thickness 1 μm at most.

4. Biaxially stretched film according to claims 1-3.

5. Application of a film according to claims 1 to 4 as condenser film.

6. Process for preparing a film according to claims 1-3, which comprises transforming a solution of a linear polypropylene having an weight average molecular weight of at least $4 \times 10^5$ with at least 50% (wt) of a solvent at elevated temperature into a solvent-containing article, converting this article by rapid cooling to below the gelling temperature into a gel article, and subjecting this gel article at a temperature above 90¤C to biaxial stretching, whether or not after removal of all or part of the solvent, with a stretch ratio lengthwise and breadthwise such that the product of the stretch ratio is at least 10.

7. Process according to claim 6, in which the gelarticle whether or not after removal of all or part of the solvent, is compressed at a temperature above 90¤C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 163 424  (TOA NENRYRO)<br><br>--- | | C 08 J    5/18<br>B 29 C   55/26<br>H 01 G    4/18 |
| A | BE-A-  903 331  (STAMICRABON)<br><br>--- | | |
| A | EP-A-0 029 119  (HOECHST)<br><br>----- | | |
| | | | **TECHNICAL FIELDS SEARCHED (Int. Cl.4)**<br><br>C 08 J<br>H 01 G |

The present search report has been drawn up for all claims

| Place of search | Date of completion of the search | Examiner |
|---|---|---|
| THE HAGUE | 15-07-1987 | VAN GOETHEM G.A.J.M. |